# EUROPEAN PATENT APPLICATION

(11) **EP 2 145 869 A1**
(43) Date of publication of application: **20.01.2010**
(21) Application number: 08356109.2
(22) Date of filing: 18.07.2008
(51) Int. Cl.: C04B 18/14, C04B 40/00

(54) **Aqueous formulations**

(71) Applicant: Lafarge SA, 75116 Paris (FR)
(72) Inventor: Fonollosa, Philippe, 38460 Cremieu (FR); Pourcel, Fabrice, 38540 Saint-Just-Chaleyssin (FR)
(74) Representative: Mérigeault, Shona

(57) **Abstract**

The invention provides an aqueous slurry comprising: a particulate pozzolan, which pozzolan comprises 80% or more of silicon dioxide; and a particulate substantially inert filler: wherein the dry matter content of the slurry is from 30% to 60%; substantially all of the elementary particles of pozzolan and filler have an elementary particle size less than 100 µm; and the particles have a mean particle size less than 15µm; a process for its preparation; a concrete comprising such a slurry; and a process for the preparation of such a concrete.

## Description

This invention relates to aqueous formulations comprising a pozzolan and a substantially inert filler in particulate form, which formulations may be used in the preparation of concrete and mortar.

A pozzolan is described in Lea's Chemistry of Cement and Concrete, 4th edition , published by Arnold, as an inorganic material, natural or synthetic, which hardens in water when mixed with calcium hydroxide (lime) or with a material which can release calcium hydroxide (such as Portland Cement clinker). A pozzolan is generally a siliceous or siliceous and aiuminous material which, alone, possesses little or no cementitious value but which is capable, in the presence of moisture, of reacting chemically with calcium hydroxide at ambient temperature to form compounds having cementitious properties. Silica fume generally comprises more than 80% silicon dioxide and is very widely used as a pozzolan but is becoming increasingly expensive.

The expression "substantially inert" in relation to the filler means that the filler possesses substantially no pozzolanic activity.

The present invention seeks to provide aqueous formulations (slurries) comprising a particulate pozzolan which pozzolan contains 80% or more of silicon dioxide, the formulations having high dry matter content, good rheology (for example being pumpable) and/or good sedimentation characteristics (for example to render the slurry less subject to sedimentation and/or to reagglomeration of pozzolans such as silica fume).

The present invention accordingly provides an aqueous slurry comprising:
- a particulate pozzolan, which pozzolan comprises 80% or more of silicon dioxide, and
- a particulate substantially inert filler;
wherein the dry matter content of the slurry is from 30% to 60%; substantially all of the elementary particles of pozzolan and filler have an elementary particle size less than 100 µm; and the particles have a mean particle size less than 15 µm.

The slurry of the invention preferably comprises a superplasticizer. The slurry may consist essentially, or consist, of water, the pozzolan and filler and, optionally a superplasticizer as hereinbefore defined. It will be understood that all or substantially all of the elementary particles in the slurry of the invention have a particle size less than 100 µm; the presence of a small but insignificant number of particles having a particle size greater than the specified value will not substantially affect the slurry's properties.

Particulate materials in aqueous suspensions, such as slurries, may comprise individual, elementary particles. The individual particles may group together to form agglomerates. The agglomerates may group together to form clusters. Unless otherwise specified particle sizes in this specification and the accompanying claims are particle sizes as measured by laser granulometry.

The pozzolan preferably has high pozzolanic activity. Such activity may be characterised by two parameters: the maximum amount of lime with which the pozzolan can combine; and the rate at which the combination occurs. The rate of combination depends, *inter alia*, on temperature and the surface area of the pozzolan. The effect of the combination rate may be reduced by choosing conditions which allow substantial completion of the combination. Preferred pozzolans for use in the invention may be identified by their activity under the following test conditions:
Lime/pozzolan ratio: 80:100;
Water/binder ratio: 2:1;
Temperature: 20°C;
Combination time: 90 days.

Preferred pozzolans combine with substantially all of the available lime (more preferred pozzolans combine with substantially all of the available lime within 28 days).

The particulate pozzolan preferably comprises a high percentage of amorphous silica, for example more than 80%, preferably more than 85%, more preferably 85 to 98% of amorphous silica. Crystalline silica may also be present provided that, for practical purposes, it stays in suspension.

Pozzolans containing 80% or more of silica include, for example, naturally occurring pozzolans (such as diatomaceous earth) or rice hull ash and artificial pozzolans such as silica fume, or a mixture thereof. Silica fume generally has a silica content of more than 80%.

The particulate substantially inert filler may be, for example a ground natural calcium carbonate (GCC) (for example chalk, calcite, marble or other naturally occurring calcium carbonate), a precipitated (also known as synthetic) calcium carbonate (PCC), barium carbonate, dolomite, talc, a crystalline silica, fumed titanium dioxide, iron oxides, manganese oxides, titanium dioxide, kaolin, clays, mica, slag, calcium sulphate, basalt, barium sulphate, aluminium hydroxide, bauxite or a mixture thereof. Ground calcium carbonate and precipitated calcium carbonate are preferred.

The filler preferably has a Moh hardness greater than 1.

The dry matter in the slurry of the invention (i.e. the pozzolan and filler excluding water) generally comprises from 20% to 100% pozzolan and from 80% to 0% filler, preferably from 20% to 80% pozzolan and from 80% to 20% filler, more preferably from 30% to 70% pozzolan and from 70% to 30% filler

The mean particle size of the mixture of elementary particles in the slurry is preferably less than 10 µm, more preferably less than 5 µm. The overall particle size range is generally 0.05 µm to 100 µm as measured by laser granulometry in water.

The BET surface area of the solid, dried materials in the slurry is preferably from 1 to 30 m²/g, preferably from 1 to 20 m²/g.

The Blaine specific surface of the solid, dried materials in the slurry is generally from 2000 to 15000 cm²/kg.

In order to produce the micro-fine slurry according to the invention wet milling is generally employed. Wet milling according to the invention seeks to provide a process in which: agglomeration and/or blocking are reduced; the rise in temperature during milling is reduced; monodisperse particles of a single material, for example pozzolan, having a narrow granulometric distribution are produced; and/or ,when pozzolan and filler are ground together, the slurry is stabilized by reducing sedimentation and/or reagglomeration of the pozzolan.

According to a further feature of the invention the slurry according to the invention is prepared by wet milling a mixture of pozzolan and substantially inert filler in water. The mill may be, for example, a bar mill, a ball mill or an impact mill. Suitable mills are known, for example those available from Netzsch and WAB. The milling is intended to produce particles having a high BET surface area, a high Blaine surface area and/or small particle size, three parameters which provide a measure of particle fineness. BET specific surface values reflect particle texture, Blaine specific surface values reflect the separation of agglomerates and laser granulometry provides a measure of agglomerated particle fineness. High Blaine fineness in the slurries of the invention render them suitable for use in, for example, self-compacting ultra high performance concrete (UHPC).

Milling may be carried out in one or more stages, depending on the starting materials and the desired properties of the slurry to be obtained. Milling may effect grinding (to reduce particle size) and/or homogenisation.

The wet milling is conducted in an aqueous medium, generally water. The pH of the aqueous medium is chosen to avoid gelling or possible setting which might arise due to activation of the pozzolan under alkaline conditions. The milling process may be continuous or batch-wise.

The mill is generally cooled to avoid overheating of the slurry by heat generated in the milling process.

The slurry obtained by milling may be concentrated by removal of water. Known methods for such removal include heating, optionally under reduced pressure; allowing the slurry to settle followed by removal of liquid from the surface; and centrifugation.

The slurry of the invention is preferably stable. After storage for a long period, for example more than a month, it may require agitation to redisperse the particles.

The pozzolan and filler before milling may have similar or different granulometries. The pozzolan and filler after milling may also have similar or different granulometries. When the pozzolan and filler have similar granulometries before milling they may have different granulometries after milling, for example when the pozzolan and filler have different hardnesses.

The granulometries of pozzolan and filler in the slurry of the invention may be similar but are preferably different. The granulometries are preferably such that particles of one material, for example the pozzolan, may occupy interstices between particles of the other. When this occurs the concentration of particles (dry matter) in the slurry may be increased. The packing density (C₀) of dry monodisperse particles, having similar size, for random close packing is about 0.60. When a second, smaller, set of particles which can pack in the interstices between the first particles is added the overall packing density is increased. The space between the first particles (1-0.6, i.e. 0.4) is ideally packed at a similar density (0.6) giving an additional solids content of 0.6×0.4 (i.e. 0.24). The total solids content might then reach 0.84. When this principle is applied to slurries it will be understood that the use of particles of differing sizes allows increased solid contents to be achieved. The use of such slurries, containing a smaller proportion of water, affords more flexibility in their use to prepare concretes, particularly concretes designed to have a low water to cement (W/C) ratio.

The granulometries of the pozzolan and filler may be the same or different.

In the slurries according to the invention the mean particle size of one material, for example the inert filler (d₁) is preferably greater than the mean particle size (d₂) of the other, for example the pozzolan.

The ratio d₁:d₂ is generally such that: (d₁) is greater than or equal to (d₂), preferably (d₁) is greater than or equal to 5(d₂), more preferably (d₁) is greater than or equal to 7(d₂).

The slurry preferably comprises a superplasticizer. The superplasticizer may be added at the start of milling, during milling or after milling when the desired particle sizes have been achieved. The superplasticizer is generally added at the start of milling.

The term "superplasticizer" as used in this specification and the accompanying claims is to be understood as including both water reducers and superplasticizers as described in the Concrete Admixtures Handbook, Properties Science and Technology, V.S. Ramachandran, Noyes Publications, 1984.

A water reducer is defined as an additive which reduces the amount of mixing water of concrete for a given workability by typically 10 - 15%. Water reducers include, for example lignosulphonates, hydroxycarboxylic acids, carbohydrates, and other specialized organic compounds, for example glycerol, polyvinyl alcohol, sodium alumino-methyl-siliconate, sulfanilic acid and casein.

Superplasticizers belong to a new class of water reducers chemically different from the normal water reducers and capable of reducing water contents by about 30%. The superplasticizers have been broadly classified into four groups: sulphonated naphthalene formaldehyde condensate (SNF) (generally a sodium salt); or sulphonated melamine formaldehyde condensate (SMF); modified lignosulfonates (MLS); and others. More recent superplasticizers include polycarboxylic compounds such as polyacrylates. The superplasticizer is preferably a new generation superplasticizer, for example a copolymer containing polyethylene glycol as graft chain and carboxylic functions in the main chain such as a polycarboxylic ether. Sodium polycarboxylate-polysulphonates and sodium polyacrylates may also be used. Phosphonic acid derivatives may also be used. The amount of superplasticizer required generally depends on the reactivity of the cement. The lower the reactivity the lower the amount of superplasticizer required. In order to reduce the total alkali content the superplasticizer may be used as a calcium rather than a sodium salt.

Other additives may be included in the composition according to the invention, for example, a defoaming agent (e.g. polydimethylsiloxane). These also include silicones in the form of a solution, a solid or preferably in the form of a resin, an oil or an emulsion, preferably in water. More particularly suitable are silicones comprising (RSiO0.5) and (R2SiO) moieties.

In these formulae, the R radicals, which may be the same or different, are preferably hydrogen or an alkyl group of 1 to 8 carbon atoms, the methyl group being preferred. The number of moieties is preferably from 30 to 120.

The amount of such an agent in the final cement is generally at most 5 parts in weight relative to the cement.

The slurry according to the invention preferably comprises a viscosity and/or yield stress modifying agent (generally to increase viscosity and/or yield stress). Such agents include: cellulose derivatives, for example water-soluble cellulose ethers, such as the sodium carboxymethyl, methyl, ethyl, hydroxyethyl and hydroxypropyl ethers; alginates; and xanthan, carrageenan or guar gum. A mixture of such agents may be used.

Water-soluble additives may be added at the start of milling, during milling or after milling when the desired particle sizes have been achieved.

The slurry according to the invention may be used in the preparation of a concrete. The term "concrete" as used hereinafter in this specification, including the accompanying claims, also embraces mortar. The concrete may be a high performance concrete (HPC), for example according to C60/80, generally having a compressive strength of 50 to 100 MPa, or an ultra high performance concrete (UHPC), for example Ductal^{®}, generally having a compressive strength of more than100 MPa. The concrete may also be self-levelling, self-consolidating or self-placing. The concrete may also be a low cement content concrete or a conventional concrete, for example according to C25/30.

When the slurry is used to prepare a concrete mix the invention seeks to provide a reduced time of mixing required to achieve design flow or slump, improved workability of the mix, and/or higher strength (for example of a HPC) for a given ultrafine particle content.

The invention also seeks to provide a formulation which is adaptable to the preparation of a pourable concrete mix or a pressable concrete mix (for example by the inclusion of superplasticizer and/or additional water); to reduce the mixing time, the ultra-fine materials having been already dispersed; to improve safety, as ultrafine components in the slurry are not dispersed into the atmosphere, where they may constitute a health risk by possible inhalation during preparation of the concrete mix; and/or to permit the preparation of a concrete mix which is adapted to provide good compressive strength after heat curing (the strength after curing may be increased substantially compared with the 48 hours strength).

The present invention accordingly provides a concrete which comprises up to 30% by weight of a slurry according to the invention. Such a concrete may comprise, for example, in relative parts by weight:
100 of Portland cement;
50 to 200 of a sand having a single grading with a D 10 to D90 between 0.063 and 5 mm, or a mixture of sands (preferably two sands), the finest sand having a D10 to D90 between 0.063 and 1 mm and the coarsest sand having a D10 to D90 between 1 and 4 mm;
up to 80 of a pozzolan-containing slurry according to the invention; and, preferably,
0.1 to 10 of a water-reducing superplasticizer.

The amount of slurry is preferably up to 70, or is more preferably about 30 parts by weight.

The sand is generally a silica sand, a calcined bauxite or a particulate metallurgical residue; the fine sand may also comprise a ground hard dense mineral material, for example a ground vitrified slag. A preferred mixture of sands comprises a mixture of sands (preferably two sands), the finest sand having a D10 to D90 between 0.063 and 1mm and the coarsest sand having a D10 to D90 between 1 and 2 mm.

The concrete according to the invention may be a self-placing concrete. The total setting shrinkage may be reduced by the inclusion of 2 to 8, preferably 3 to 5, for example about 4 parts, of quicklime, burnt lime or calcium oxide in the mixture before addition of slurry.

The concrete according to the invention may also be a high performance concrete (HPC): such concretes generally have a compressive strength greater than 100 MPa.

The inert filler, before milling to produce a slurry according to the invention, may be a particulate calcium carbonate (for example ground or precipitated). It is preferably a ground calcium carbonate.

The preferred BET surface area is 2 - 10 m²/g, generally less than 8 m²/g, for example 4 to 7 m²/g, preferably less than 6 m²/g, The inert filler may be, for example, Durcal^{®} 1.

The inert filler before milling may have a mean particle size of less than 5 µm, for example 1 to 4 µm.

The non-pozzolan may be a ground silica, for example quartz, having a particle size <100 µm, preferably <80 µm, for example C800 which is a substantially non-pozzolanic silica filler having a D₉₀ of 1.3 µm available from Sifraco, France.

The inert filler before milling may also be a precipitated calcium carbonate. Individual (primary) particles generally have a particle size of about 20 nm. Individual particles agglomerate into clusters having a (secondary) particle size of about 0.1 to 1 µm. The clusters themselves form agglomerates having a (ternary) particle size greater than 1 µm. The BET surface area before milling (determined by known methods) may be 20 - 40 m²/g. Durcal 1 may also be used.

The concentration of starting material before milling is generally 20 to 40%. The milling time depends on the starting materials and the operating parameters of the mill. Dispersion of solid material in the aqueous suspending medium may be conducted for about half an hour. Milling may be conducted for about two hours.

A mill may be operated either in recirculatory mode (in which the recirculated product is returned to the feed, for example via a storage tank) or in multi-pass mode (in which the product circulates one or more times as a batch). Milling is optimised by a suitable choice of:
the dimension of, for example, the milling balls (the smaller these are the smaller the milled particles);
the concentration of solids in the suspension being milled (more dilute suspensions are better adapted to milling);
the use of an appropriate grinding agent (for example superplasticizer) which ensures good deflocculation in order to improve the effectiveness of grinding.

The cements of the invention may comprise metal and/or organic fibres. The amount by weight of fibres is generally from 15 to 25 parts per 100 parts of cement. The amount of metal fibres, expressed in terms of the volume of the final set concrete is generally less than 4%, for example from 0.5 to 3.5%, preferably about 2%. The amount of organic fibres, expressed on the same basis, is preferably 2 to 4.5%. Concrete is generally batched by weight with the weight of additives expressed relative to the weight of cement, not the total weight of concrete. The weight of cement in a cubic metre of concrete containing metal fibres is about 750 kg/m³. The weight of metal fibres relative to the weight of cement is preferably 120 to 170 kg/m³, more preferably about 160 kg/m³. The weight of cement in a cubic metre of concrete containing organic fibres is about 700 kg/m³. The weight of organic fibres relative to the weight of cement is preferably 25 to 60 kg/m³, more preferably about 55 kg/m³. When such fibres are included the concrete according to the invention is preferably an ultra high performance concrete: such concretes generally have a compressive strength greater than 100 Mpa, preferably greater than 150 MPa.

Metal fibres are generally chosen from steel fibres, such as high strength steel fibres, amorphous steel fibres or stainless steel fibres. Optionally, the steel fibres may be coated with a non-ferrous metal such as copper, zinc, nickel (or their alloys).

The individual length (1) of the metal fibres is generally at least 2 mm and is preferably 10-30 mm. The 1/d ratio (d being the diameter of the fibres) is generally at least 30, and preferably at most 100.

Fibres having a variable geometry may be used: they may be crimped, corrugated or hooked at the ends. The roughness of the fibres may also be varied and/or fibres of variable cross-section may be used; the fibres may be obtained by any suitable technique, including by braiding or cabling several metal wires, to form a twisted assembly.

Bonding between the fibres and matrix may be promoted by several means, which may be used individually or in combination.

According to a first means, the bonding of the metal fibres in the cementitious matrix may be promoted by treating the surface of the fibres. This fibre treatment may be carried out by one or more of the following processes: fibre etching; or deposition of a mineral compound on the fibres, especially by depositing silica or a metal phosphate.

The etching may be carried out, for example, by contacting the fibres with an acid, followed by neutralization.

Silica may be deposited by contacting the fibres with a silicon compound, such as a silane, a siliconate or a silica sol. It will be understood that the silica or phosphate is then substantially confined to the surface of the metal fibres in the concrete matrix and is not uniformly dispersed in the matrix.

Phosphatizing treatments are known and are described, for example, in the article by

G. LOR1N entitled "The Phosphatizing of Metals" (1973), Pub.Eyrolles.

In general, a metal phosphate is deposited using a phosphatizing process, which comprises introducing prepickled metal fibres into an aqueous solution comprising a metal phosphate, preferably manganese phosphate or zinc phosphate, and then filtering the solution in order to recover the fibres: the fibres are then rinsed, neutralized and rinsed again. Unlike in the usual phosphatizing process, the fibres obtained do not have to undergo grease-type finishing; they may, however, optionally be impregnated with an additive either in order to provide anticorrosion protection or to make it easier for them to be processed with a cementitious medium. The phosphatizing treatment may also be carried out by coating or spraying a metal phosphate solution onto the fibres.

According to a second means, bonding of the fibres to the cementitious matrix may be promoted by introducing into the composition one or more compounds selected from: precipitated calcium carbonate, polyvinyl alcohol in aqueous solution, a latex or a mixture thereof.

Organic fibres include polyvinyl alcohol fibres (PVA), polyacrylonitrile fibres (PAN), polyethylene fibres (PE), high density polyethylene fibres (HDPE), polypropylene fibres (PP), homo- or copolymers, polyamide or polyimide fibres, aramid fibres and carbon fibres. Mixtures of these fibres can also be used. The organic reinforcing fibres used in the invention may be classified as: high modulus reactive fibres, low modulus non-reactive fibres and reactive fibres. Examples include non-reactive HDPE fibres, the modulus of which is generally higher than that of the concrete matrix, non-reactive polyamide fibres (PA), the modulus of which is generally lower than that of the concrete matrix and PVA fibres which are capable of reacting with the concrete matrix. The term "modulus" as used in this specification including the accompanying claims, refers to Young's modulus (modulus of elasticity).

A mixture of metal and organic fibres may also be used: a "hybrid" composite is thereby obtained the mechanical behaviour of which may be adapted depending upon the required performance (for elastic and cold working and post-peak performance).

The presence of organic fibres makes it possible to modify the behaviour of the concrete to heat or fire.

Melting of organic fibres makes it possible to develop pathways through which steam or water under pressure can escape when the concrete is exposed to high temperatures.

Hybrid metal and organic reinforcing elements may be produced by combining fibres of various natures and/or lengths. Examples include short PVA organic fibres (6 mm) and long metal fibres (13 mm) which may show a reinforcing synergistic effect; PVA or HDPE short fibres (6 mm) and PVA long fibres (20 mm), short steel cords (5 mm) and PVA long fibres (20 mm).

The organic fibres may be present as a monostrand or multistrand; the diameter of the mono- or multistrand is preferably from 10 µm to 800 µm. The organic fibres may also be used in the form of woven or non-woven structures or of a hybrid strand comprising a different filament.

The individual length of the organic fibres is preferably 5 mm to 40 mm.

The amount of organic fibres is generally such that their volume is from 1% to 8% and preferably less than 5% of the concrete volume after setting. The optimum quantity of organic fibres used generally depends on the fibre geometry, their chemical nature and their intrinsic mechanical properties (e.g. elastic modulus, flowing threshold, mechanical strength).

The L/Φ ratio, Φ being the fibre diameter and L the length, is generally at least 30 and preferably 300 at the most.

The use of blends of fibres having different properties permits modification of the properties of the concrete containing them.

Adherence of polymeric fibre to a concrete matrix may be promoted by various methods used alone or in combination. Adherence is promoted by using reactive fibres: adherence can be enhanced by thermal treatment of the concrete, for example by curing. Adherence can also be promoted by surface treatment of the fibres.

Fibre adherence to the cement matrix can be promoted by including in the concrete composition a compound selected from: precipitated calcium carbonate; an aqueous solution of polyvinyl alcohol; phosphates; latexes; a surfactant (for example a defoaming agent or wetting agent); or a mixture thereof.

The ratio R of the average length L of the fibres to the grain size D of the sand is generally at least 5, particularly when the sand has a maximum grain size of 1 mm.

The cement in the concrete of the invention may be, for example a type I, II, III, IV or V cement according to ENV 197-1 or may be a masonry cement for the preparation of mortar. The Portland cements include slag; silica fume; pozzolana; fly ash; burnt shale; limestone; and composite cements. A preferred cement for use in the invention is CEM I.

The water/binder ratio used for the cement according to the invention may vary with the amount and type of the pozzolan and filler. The water/binder ratio (W/B), where W is the weight of water and B is the combined weight of cement and pozzolan used for the concrete according to the invention may vary with the amount and type of the pozzolan and filler. The water-binder ratio is generally less than about 0.7, for example less than about 0.6, and more than about 0.08; it is generally from 0.08 to 0.3, preferably from 0.13 to 0.25, for example about 0.2. The water/binder ratio may be adjusted using, for example water-reducing agents and/or superplasticizers.

In using a slurry according to the invention to prepare a concrete mix the slurry is generally added after the aggregates or to a premix. The slurry may provide all of the water required or more may be added if necessary. In the preparation of UHPC all of the water required may be provided by the slurry; for HPC more water may be added, either separately or by using a more dilute slurry.

The following order of mixing may, for example, be adopted: mixing of the pulverulent constituents of the matrix; introduction of the slurry and a fraction, for example half, of the admixtures; mixing; introduction of the remaining fraction of the admixtures; mixing; introduction of the reinforcing fibres and the additional constituents; mixing.

The concrete may be subjected to a cure to improve its mechanical properties. Curing is generally conducted at a temperature from ambient temperature (e.g. 20°C to 90°C), preferably from 60°C. to 90°C. The curing temperature should be less than the boiling point of water at the ambient pressure. The curing temperature is generally less than 100°C. Autoclaving in which curing is conducted at elevated pressures allows higher curing temperatures to be used.

The cure time may be, for example, 6 hours to 4 days, preferably about 2 days. Curing may be started before or after setting, preferably at least one day after setting has started, and preferably on concrete which is 2 days up to about 7 days old, at 20°C.

The cure may be performed in dry or wet conditions or in cycles alternating both environments, for example, a 24 hour cure in a humid environment followed by a 24 hour cure in a dry environment.

The concrete may be pretensioned, by bonded wires or by bonded tendons, or post-tensioned, by single unbonded tendons or by cables or by sheaths or bars, the cable comprising an assembly of wires or comprising tendons.

Prestressing, whether in the form of pretensioning or in the form of post-tensioning, is particularly well suited to products made of the concrete according to the invention.

Metal prestressing cables have a very high, under-used, tensile strength since the brittleness of the matrix which contains them does not allow the dimensions of the concrete structural elements to be optimized.

The reduction in volume obtained, because of this increase in mechanical strength, allows the production of prefabricated elements. There is then the possibility of having long-span concrete elements that are easily transportable because of their lightness; this is particularly well suited to the construction of large structures in which the use of post-tensioning is widely employed. In the case of this type of structure, the solution provides particularly favourable savings to be made in terms of worksite duration times and assembly.

In addition, in the case of a thermal cure, the use of pre-tensioning or post-tensioning significantly reduces shrinkage.

In this specification including the accompanying claims:
compressive strength values are measured after moist curing for two days at 20°C, and then moist curing for 2 days at 90°C on cylindrical test samples having a diameter of 7 cm and a height of 14 cm; the force applied to the sample is increased at a rate of 3.85 kN/sec during testing;
flexural strengths are measured after moist curing as described for compressive strength values on prism-shaped test samples measuring 4 x 4 x 16 cm supported at two points, force being applied in the middle; the force applied to the sample is increased at a rate of 0.05 kN/sec during testing;
percentages, unless otherwise specified, are by weight;
surface areas of materials are measured by:
   the BET method using a Beckman Coulter SA 3100 apparatus with nitrogen as the adsorbed gas; or
   Blaine surface areas are measured at 20°C at a relative humidity not exceeding 65% using a Blaine Euromatest Sintco apparatus in accordance with European Standard EN 196-6;
prior to the measurement of surface area, slurry samples are dried in an oven to a constant mass at a temperature of 50 - 150°C (the dried product is then ground to produce a powder all of which is capable of passing through an 80 µm sieve);
slump values (dynamic, with shocks - normally 20 -, at intervals of about 1 second, or static, without shocks) are measured on a circular shock table (diameter 300 mm, thickness 5.9 mm, weight about 4.1 kg) with a drop of about 12 mm. Test samples (500 ml) are prepared using a flattened conical mould height 50 mm,top diameter 70 mm, bottom diameter100 mm; static values (without shocks) are measured after the sample has stopped moving after demoulding; and
mean particle sizes and distributions of fine particles (100 nm to 100 µm), are measured by laser granulometry using a Malvern Mastersizer 2000 (measurements are carried out on diluted suspension of particles).

The invention is illustrated by the following non-limiting Examples. In the Examples materials used are available from the following suppliers:

| | |
|---|---|
| Silica fume NS 980 | SEPR, France |
| Durcall | Omya, France |
| Durcal 1 has a BET value of about 5 m²/g. | |
| Superplasticizer F2 | Chryso, France |
| Silica fume 971 U | Elkem, Norway |
| HTS cement | Lafarge France Le Teil cement. |
| Sand Be01 | Sifraco, France |

### EXAMPLE 1

A slurry was prepared using an LME1 (Netzsch) mill. The mill comprises a horizontal tank in the interior of which a stirring shaft equipped with pierced disks agitates a bed of monomodal ceramic balls whose diameter can be chosen as necessary for the desired milling (minimum dimension: 0.4 mm). A cage system at the end of the tree allows a first separation of the balls and product. A second static separation system, arranged at the centre of cage comprises a cartridge having openings of 0.1 mm. The mill can be operated either in recirculatory mode (in which the recirculated product is returned directly to the feed via a storage tank) or in multi-pass mode (in which the product circulates one or more times as a batch). Milling is optimised by a suitable choice of:
the dimension of the milling balls (the smaller these are the smaller the milled particles);
the concentration of solids in the suspension being milled (more dilute suspensions are better adapted to milling);
the use of an appropriate grinding agent (superplasticizer) which ensures good deflocculation in order to improve the effectiveness of grinding.

The starting material was a mixture of 40% silica fume NS 980 and 60% Durcal 1. A superplasticizer (F2) was included in the aqueous milling medium.

Zirconia/silica 04/06 mm balls were used.

The loading level was 80% (about 1400g).

Milling with recirculation was carried out for 45 minutes.

| | |
|---|---|
| Mill speed | 2500 tpm |
| Pressure | 0.3 bar |
| Ampage | 3.5 |
| Pump speed | 2.5 |
| Slurry output | 760 g/min |

The slurry obtained contained 58.5% dry matter and had the following composition:

| | |
|---|---|
| NS 980 | 22.72% |
| Durcal 1 | 33.98% |
| F2 (active material) | 1.76% |
| Water | 41.54% |

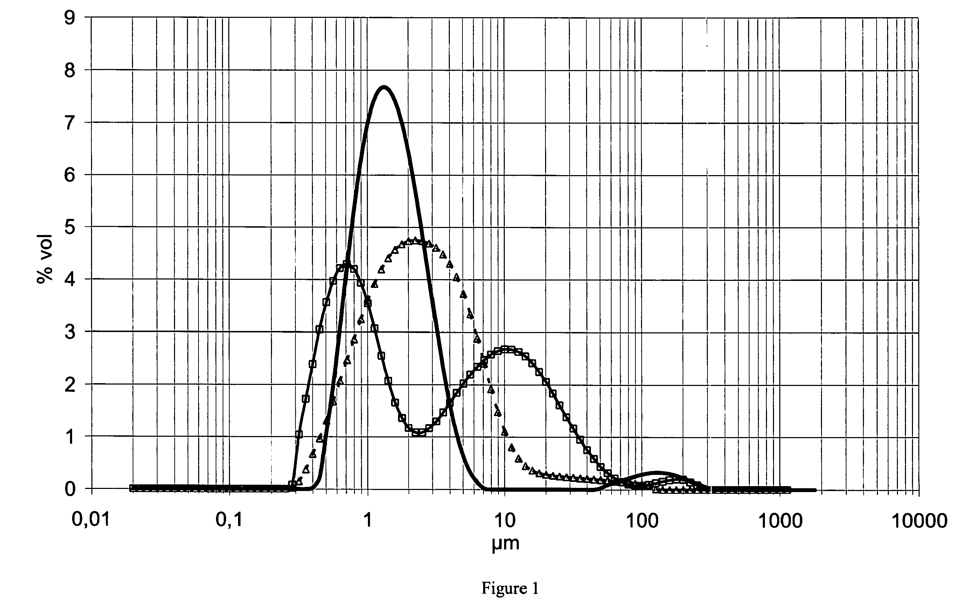

The particle size distribution of the slurry was measured on a diluted sample and the results obtained are shown by the plain solid line in Figure 1. Particle size in µm is plotted on the abscissa and % by volume is plotted on the ordinate. The particle size distribution of the NS980 before wet milling is shown by the solid line marked by squares. The particle size distribution of Durcal 1 before wet milling is shown by the dotted line marked by triangles.

### EXAMPLE 2

The procedure used was similar to that described in Example 1.

The starting material (particle size <80 µm) was a mixture of 40% silica fume (Elkem 971 U) and Durcal 1 (60%).

Zirconia/silica 04/06 mm balls were used.

The loading level was 80% (about 1400g).

Milling with recirculation was carried out for 45 minutes.

| | |
|---|---|
| Mill speed | 2500 tpm |
| Pressure | 0.2 bar |
| Ampage | 3.5 |
| Pump speed | 2.5 |
| Slurry output | 850 g/min |

The slurry obtained contained 54.5% dry matter and had the following composition:

| | |
|---|---|
| 971U | 20.92% |
| Durcal 1 | 31.36% |
| F2 (active material) | 2.27% |
| Water | 45.45% |

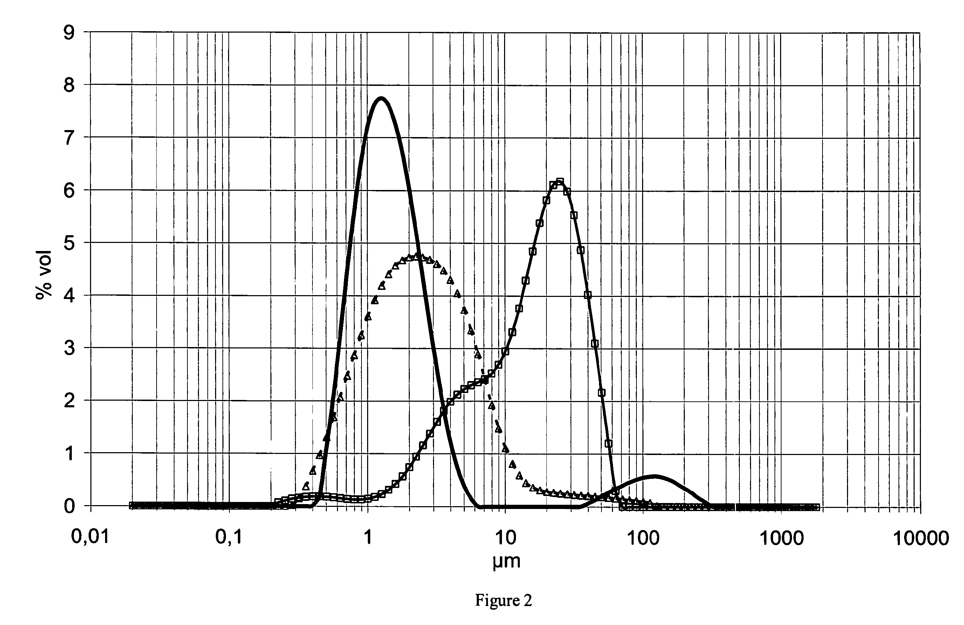

The particle size distribution of the slurry was measured on a diluted sample and the results obtained are shown by the plain solid line in Figure 2. Particle size in µm is plotted on the abscissa and % by volume on the ordinate. The particle size distribution of the 971 U before wet milling is shown by the solid line marked by squares. The particle size distribution of Durcal 1 before wet milling is shown by the dotted line marked by triangles.

### EXAMPLE 3

The slurries prepared in Examples 1 and 2 were used to replace silica fume in a concrete mix having the following composition:

| | Relative amounts |
|---|---|
| Cement (HTS) | 1 |
| Silica fume or slurry (expressed as dry matter) | 0.17 |
| Filler (Durcal 1) | 0.12 |
| Filler (Durcal 5) | 0.3 |
| Sand (BE 01) | 1.37 |
| Admixture (F2) | 0.0365 |
| W/C | 0.225 |

Mixing was carried out in a Rayneri mixer.

The following results were obtained:

| | W/C | Spread (mm) | | Flow time (s) |
|---|---|---|---|---|
| | | Static | After shocks | |
| Example 1 | 0.21 | 240 | 260 | 142 |
| Example 2 | 0.21 | 220 | 240 | 136 |

| | W/C | Setting time | | Compressive strength(MPa) | | Flexural strength after thermal curing (MPa) |
|---|---|---|---|---|---|---|
| | | Beginning | End | 48 hr | After thermal curing | |
| Example 1 | 0.21 | 11hr 30 | 17hr30 | 96.6 | 192 | 23.3 |
| Example 2 | 0.21 | 19hr30 | 24hr30 | 78.2 | 196 | 24.8 |

## Claims

1. An aqueous slurry comprising:
- a particulate pozzolan, which pozzolan comprises 80% or more of silicon dioxide, and
- a particulate substantially inert filler;
wherein the dry matter content of the slurry is from 30% to 60%; substantially all of the elementary particles of pozzolan and filler have an elementary particle size less than 100 µm; and the particles have a mean particle size less than 15 µm.

2. A slurry according to claim1 which also comprises a superplasticizer.

3. A slurry according to claim1 or 2 in which the particulate pozzolan comprises from 85 to 98% of amorphous silica.

4. A slurry according to any one of the preceding claims in which the dry matter content of the slurry is from 30% to 70% pozzolan and from 70% to 30% filler.

5. A slurry according to any one of the preceding claims in which the mean particle size of the elementary particles in the slurry is less than 5µm.

6. A slurry according to any one of the preceding claims in which the overall particle size range is from 0.05 µm to 100 µm.

7. A slurry according to any one of the preceding claims in which the ratio of the mean particle size (d₁) of the filler and the mean particle size (d₂) of the pozzolan are such that (d₁) is greater than or equal to 7(d₂).

8. A method of preparing an aqueous slurry according to claim1 which comprises wet milling a pozzolan and, optionally, a substantially inert filler in water.

9. A concrete which comprises up to 30% by weight of a slurry according to claim 1.

10. A method of preparing a concrete according to claim 9 which comprises mixing a slurry according to claim 1 with the other components of the concrete matrix.
